# EUROPEAN PATENT APPLICATION

(11) **EP 3 229 089 A1**
(43) Date of publication of application: **11.10.2017**
(21) Application number: 17163860.4
(22) Date of filing: 30.03.2017
(51) Int. Cl.: G05B 19/402, B25J 17/02, B25J 9/16

(54) **SYSTEM FOR CONTROLLING THE POSITION OF A TOOL AND METHOD OF CONTROLLING THE POSITION OF SAID TOOL**

(30) Priority: 04.04.2016 ES 201630405
(71) Applicant: Ideko, S.Coop., 20870 Elgoibar Guipuzcoa (ES)
(72) Inventor: Iglesias Iruretagoyena, Iñaki, 20870 ELGOIBAR (ES); Mendikute Garate, Alberto, 20870 ELGOIBAR (ES); Urreta Prieto, Harkaitz, 20870 ELGOIBAR (ES)
(74) Representative: Buceta Facorro, Luis

(57) **Abstract**

The invention relates to a system for controlling the position of a tool (3) and a method of controlling the position of said tool, comprising a main structure (1) with first operating means (10) and a first control unit (2) configured for controlling the first operating means (11) and positioning the tool (3), a secondary structure (4) having a first end (41) for being attached to the main structure (1) and a second end (42) for being attached to the tool (3), wherein the secondary structure (4) has second operating means (40) for moving the tool (3) with respect to the main structure (1), vision means (5) configured for determining the position of the tool (3), and a second control unit (6) configured for controlling the second operating means (40) of the secondary structure (4) and correcting the position of the tool (3) according to the position determined by the vision means (5).

## Description

### Field of the Art

The present invention relates to the control and positioning of a tool in the work space of a machine, relating to a system and method that allow positioning the tool in a more precise manner than when only the operating means of the main structure of the machine are used; to that end, the invention proposes the use of vision means which determine the positioning error of the tool caused by the main structure of the machine, and a secondary structure which is introduced in the main structure of the machine and has independent operating means for correcting the position of the tool.

### Prior Art

The precision requirements demanded by the industrial sector are increasingly higher, which leads manufacturers of industrial robots and machine tools, for example, to constantly strive for improvement in developing more precise machinery, maintaining a competitive market cost.

Precision is primarily conditioned by the actual structure of the machine moving the tool in the work space of the machine. Therefore precision in positioning of the tool can be affected, among other factors, by the lack of perpendicularity between the machine shafts, thermal straining of the machine structure, or straining due to the acting stresses of the operating means of the machine structure.

In this regard, for example, industrial robots comprising a main structure with operating means having 6 or more degrees of freedom that allow positioning the tool with significant flexibility in a large work space volume are known. Precision in positioning of the tool in this type of machinery can reach 0.1 mm, which albeit sufficient for a number of applications, such as, for example, loading or unloading, inspection tasks, it is not sufficient for applications of another type, such as certain high-accuracy machining or positioning operations which require working with precision ranges of less than 0.01 mm.

A solution that allows providing independent and improved precision to the main structure of a machine that already has operating and control means for orienting and positioning the tool in the work space of the machine is therefore needed.

### Object of the Invention

The invention proposes a system with a secondary structure and vision means that allow providing independent and improved precision to the main structure of a machine that already has a control for positioning and orienting the tool in the work space of the machine. The invention can be applied to the main structure of a machine such as industrial robots, machine tools provided with a ram (machining centers, vertical lathes, mills, vertical grinders), gantry-type machines, or the like.

The system for controlling the position of a tool of the invention comprises a main structure with first operating means of the main structure and a first control unit configured for controlling the first operating means of the main structure and positioning the tool. The system additionally comprises:
- a secondary structure having a first end for being attached to the main structure and a second end for being attached to the tool, wherein the secondary structure has second operating means for moving the tool with respect to the main structure;
- vision means configured for determining the position of the tool; and
- a second control unit configured for controlling the second operating means of the secondary structure and correcting the position of the tool according to the position determined by the vision means.

The first end of the secondary structure is attached to the second end of the secondary structure by the second operating means which are made up of three pairs of arms, wherein the arms of each pair are arranged at an angle with respect to one another, and wherein the arms are linearly extendable and are connected to the ends of the secondary structure by means of rotating attachments, such that the secondary structure is provided with enormous precision for correcting the position of the tool.

The vision means are envisaged to be a photogrammetric system with at least one camera or a laser tracking system.

The method using the system of the invention comprises the steps of:
- positioning the tool using the first operating means of the main structure,
- determining the position of the tool using the vision means,
- correcting the position of the tool using the second operating means of the secondary structure according to the position determined by the vision means.

A simple and low-cost system and method that allow providing a machine that already has precision and orientation control of the tool with additional control for correcting and improving precision and orientation of the tool are accordingly obtained.

### Description of the Drawings

Figure 1 shows an example of the system for controlling the position of a tool of the invention applied to an industrial robot.
Figure 2 shows a perspective view of an embodiment of the secondary structure of the system of the invention.
Figures 3, 4 and 5 show non-limiting examples of machines in which the system of the invention can be used.

### Detailed Description of the Invention

The system of the invention used for controlling the position of the tool (3) in machines, such as robots, machine tools or the like, comprises a main structure (1) which has first operating means (10) for moving the main structure (1) in a work space of the machine, and a first control unit (2) which is configured for controlling the first operating means (11) of the main structure (1). The tool (3) is arranged associated with the main structure (1), such that by moving the main structure (1) the tool (3) can be positioned in any position and orientation within the work space.

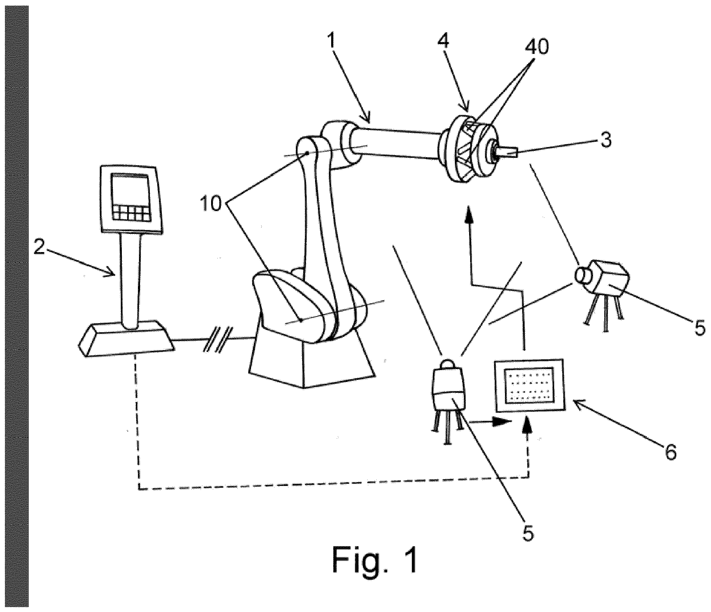

The main structure (1), the first operating means (11), the first control unit (2) and the tool (3) are elements of the machine, so Figure 1 shows, for example, an embodiment of the system of the invention applied to an industrial robot, wherein the main structure (1) corresponds with articulated parts having an arm where the tool (3) is coupled, the first operating means (11) correspond with the operating shafts by means of which the articulated parts of the robot move, and the first control unit (2) corresponds with the CNC of the robot.

The tool (3) can be positioned with a degree of precision that may reach, for example, 0.1 mm by means of the movement of the articulated parts of the main structure (1) of the robot; however, the position and orientation with which the tool (3) is positioned by means of the main structure (1) may not be precise enough when higher precisions are required, for example, precision ranges of less than 0.01 mm.

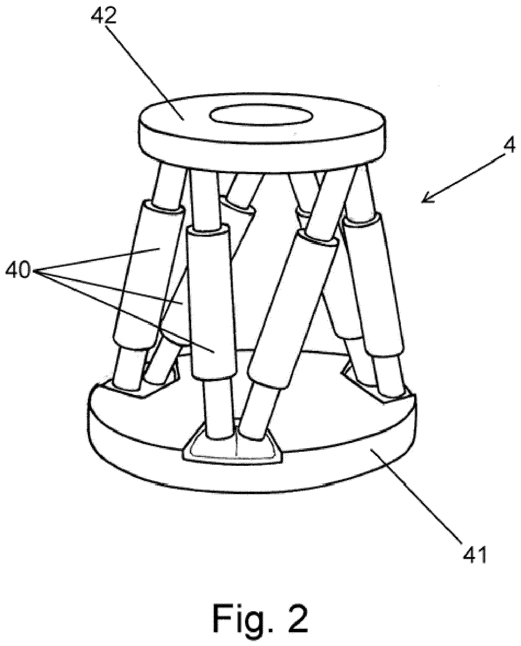

As a result, to increase precision in the positioning of the tool (3), the system of the invention additionally comprises a secondary structure (4) with second operating means (40) which can be coupled to the main structure (1), specifically the secondary structure (4) has a first end (41) which can be coupled to the main structure (1) and a second end (42) which can be coupled to the tool (3) (see Figure 2).

With this being the case, the first operating means (11) allow moving the main structure (1) for initially positioning the tool (3) in the work space of the machine, and the second operating means (40) allow moving the secondary structure (4) with respect to the main structure (1) for correcting the position of the tool (3) in the work space of the machine.

As seen in the example of Figure 1, the secondary structure (4) can be readily installed in a commercial industrial robot, for which purpose the tool (3) must simply be decoupled from the arm of the robot and the secondary structure (4) be placed in between them.

The system of the invention additionally comprises vision means (5) located outside the machine which are particularly configured for determining the position of the tool (3) in the work space of the machine. The vision means (5) can be any contactless measuring system, such as a photogrammetric system, for example, with at least one vision camera, a laser tracking system, or any other vision system that allows determining the position and orientation of the tool (3) with a higher degree of precision that what can be obtained from the first control unit (2) of the main structure (1) of the machine.

Therefore, the system of the invention additionally comprises a second control unit (6) which is configured for controlling the second operating means (40) of the secondary structure (4) and positioning it according to the information supplied by the vision means (5), such that the position and orientation of the tool (3) which was previously positioned by the main structure (1) are corrected.

Figure 2 shows a non-limiting embodiment of the secondary structure (4), which is a parallel kinematic machine with six degrees of freedom, or hexapod, offering enormous precision with respect to positioning when the courses of movement are small.

The secondary structure (4) comprises a first end (41) and a second end (42) attached to one another by operating means (40) made up of six arms, specifically three pairs of arms, wherein each pair of arms has a V-shaped arrangement, such that the arms of each pair are arranged at an angle with respect to one another. The arms are linearly extendable and are connected to the ends (41, 42) of the secondary structure (4) by means of rotating attachments, such that the second end (42) of the secondary structure (4) can move with respect to the first end (41) of the secondary structure (4) according to six degrees of freedom, i.e., a linear movement along the longitudinal axis of each arm, and a rotational movement on the longitudinal axis of each arm. The secondary structure (4) thereby allows positioning the tool (3) with respect to the main structure (1) with enormous precision.

With this being the case, the method of the invention comprises a first step wherein the first control unit (2) controls the first operating means (10) of the main structure (1) for positioning the tool (3) according to a theoretical position in the work space of the machine. In a second step the vision means (5) determine the real position of the tool (3) in the work space of the machine and compare it with the theoretical position the main structure (1) places the tool (3) in. Given that the main structure (1) does not usually have suitable precision for positioning the tool (3) with precision ranges of less than 0.01 mm, there is often a slight deviation between the theoretical position and the real position of the tool (3), which must be corrected.

Therefore, in a third step of the method the second control unit (6) of the secondary structure (4) receives the information in relation to the real position of the tool (3) determined by the vision means (5), and orders the second operating means (40) to move the secondary structure (4) with respect to the main structure (1) and to correct the position and orientation of the tool (3) in the work space of the machine.

Additionally, in a fourth step of the method the vision means (5) can be used to verify that the tool (3) has been correctly positioned according to the theoretical position demanded by the first control unit (2).

By means of constantly repeating the first to third steps of the method, or additionally the first to fourth steps, a real time correction of the position of the tool can be established for orienting and positioning it with precision according to the theoretical position demanded by the first control unit (2).

The ample courses of movement of the main structure (1) of the machine which allow positioning the tool (3) at any point of the work space are therefore utilized, and any deviation in the orientation and position of the tool (3) initially positioned by the main structure (1) can be corrected by means of the secondary structure (4) and the vision means (5), thereby providing a machine that inherently has a suitable precision range, for example, precision ranges of up to 0.1 mm, with greater precision, for example, precision ranges of less than 0.01 mm.

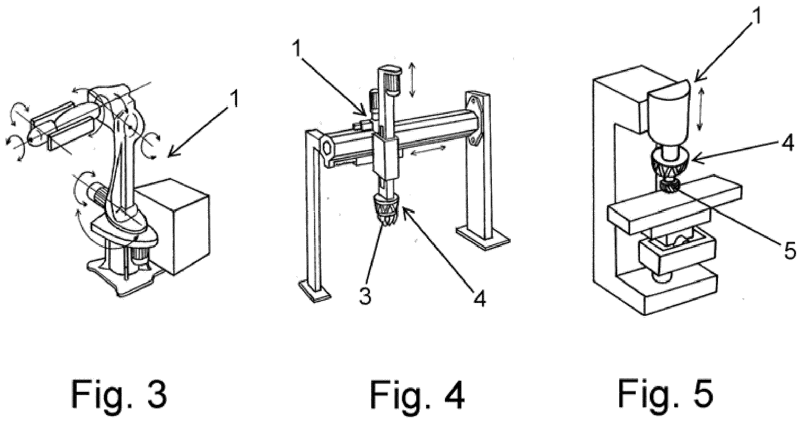

The invention has been described for its application in an industrial robot such as the one depicted in Figures 1 and 3; nevertheless, and without changing the concept of the invention, the system and method of the invention can be applied to machines of another type in which additional and improved precision in positioning of the tool with respect to the precision that the main structure of the machine itself already provides is required.

The invention can therefore be applied, for example, to a gantry-type machine such as the one depicted in Figure 4, wherein the main structure (1) carrying the secondary structure (4) and the tool (3) is a mobile column (commonly referred to as a ram) that can be moved vertically and horizontally with respect to a bridge structure.

Another possible example of an application of the system and method of the invention is illustrated in Figure 5, which shows a column mill-type machine tool wherein the main structure (1) carrying the secondary structure (4) with the tool (3) is a column moving at least vertically with respect to a work bench.

In the sense of the present invention, tool (3) is understood as any type of tool suitable for machines such as industrial robots, machine tools or the like, such as, for example, a cutting tool (milling cutter, laser, etc.), a gripping tool (hook, clamp, etc.), a control tool (contact probe), etc.

## Claims

1. A system for controlling the position of a tool (3), comprising a main structure (1) with first operating means (10) of the main structure (1) and a first control unit (2) configured for controlling the first operating means (11) of the main structure (1) and positioning the tool (3), **characterized in that** it additionally comprises:
- a secondary structure (4) having a first end (41) for being attached to the main structure (1) and a second end (42) for being attached to the tool (3), wherein the secondary structure (4) has second operating means (40) for moving the tool (3) with respect to the main structure (1);
- vision means (5) configured for determining the position of the tool (3); and
- a second control unit (6) configured for controlling the second operating means (40) of the secondary structure (4) and correcting the position of the tool (3) according to the position determined by the vision means (5).

2. The system for controlling the position of a tool (3) according to claim 1, **characterized in that** the first end (41) of the secondary structure (4) is attached to the second end (42) of the secondary structure (4) by the second operating means (40) which are made up of three pairs of arms, wherein the arms of each pair are arranged at an angle with respect to one another, and wherein the arms are linearly extendable and are connected to the ends (41, 42) of the secondary structure (4) by means of rotating attachments.

3. The system for controlling the position of a tool (3) according to claim 1 or 2, **characterized in that** the vision means (5) are a photogrammetric system with at least one camera.

4. The system for controlling the position of a tool (3) according to claim 1 or 2, **characterized in that** the vision means (5) are a laser tracking system.

5. A method of controlling the position of a tool (3) using the system defined according to any one of the preceding claims, **characterized in that** it comprises the steps of:
- positioning the tool (3) using the first operating means (10) of the main structure (1),
- determining the position of the tool (3) using the vision means (5), and
- correcting the position of the tool (3) using the second operating means (40) of the secondary structure (4) according to the position determined by the vision means (5).
